# EUROPEAN PATENT SPECIFICATION

(11) **EP 2 772 293 B1**
(45) Date of publication and mention of the grant of the patent: **03.06.2020**
(21) Application number: 13157424.6
(22) Date of filing: 01.03.2013
(51) Int. Cl.: B01D 39/16, B01D 46/00, B01D 46/02, B01D 46/04, B01D 53/54, B01D 53/88, B01J 20/02, B01D 41/02, B08B 3/04

(54) **Textile Filter System and method for regenerating a textile filter**
Textilfiltersystem und Verfahren zur Regeneration eines Textilfilters
Système de filtre textile et procédé de régénération d'un filtre textile

(43) Date of publication of application: 03.09.2014
(73) Proprietor: W. L. Gore & Associates GmbH, 85639 Putzbrunn (DE); W. L. Gore & Associates, Inc., Newark, DE 19711 (US)
(72) Inventor: EBERT, Johannes, 83059 Kolbermoor (DE); GEBERT, Richard, MD, 21921 Elkton (US); HARDWICK, Steve, DE, 19211 Newark (US); SHERMAN, Tim, MD, 21901 North East (US)
(74) Representative: HGF Limited

(56) References cited:
- EP-A1- 1 157 728
- EP-A2- 0 391 660
- WO-A1-96/33793
- AU-B2- 418 418
- DE-A1- 10 027 320
- GB-A- 2 304 600
- JP-A- H1 119 477
- JP-A- H10 230 119
- JP-A- H10 328 515
- JP-A- 2008 119 614
- US-A- 3 826 066
- US-A1- 2004 074 391
- US-A1- 2006 201 119
- US-A1- 2007 104 631
- US-A1- 2009 274 979

## Description

The present invention relates to a textile filter system of a pulse jet filtration device. Furthermore, the invention relates to a method for regenerating a textile filter for removing substances from a flue gas stream and to a regeneration apparatus for textile filters for removing substances from a flue gas stream.

Removal of pollutants from a gas stream, for example a flue gas stream in industrial facilities can be achieved by mechanical filters and chemically active filter systems. One of the most targeted pollutants in fluid gases is NOx due to its impact on acid rain, deterioration of coastal estuaries and its impact on the greenhouse effect by forming ozone. A further targeted pollutant in flue gas streams is NH₃.

The use of textile filter systems in industrial facilities is known, e.g. from US 6 331 351 B1 or US 8 114 201 B2. The textile filter systems according to US 8 114 201 B2 comprise a bag-over-bag design, wherein one textile outer bag and one textile inner bag are responsible for achieving two different purposes. One bag is provided for removal of particles from the gas stream, the other bag is provided with a chemically active component such as a catalytic component to catalytically decompose NOx or NH₃. The chemically active filter bags require downtime in order for the filter bag to be periodically regenerated in order to obtain an optimized filter effect again. The particulate filter bag can be cleaned during operation time without removal by a strong air pulse which is blown into the filter system in a direction opposite to the flow direction of the flue gas stream. Thus, the cleaning of the particulate textile filter bag can be achieved within the filtration device.

By the cleaning step particulates are removed from the surface of the particulate textile filter bag.

The textile, chemically active filter bag, however, is to be removed from the device to be regenerated separately during a recovery cycle. By the regenerating step the activity of the chemically active compounds on the chemically active filter bag is recovered.

There are two different main filtration concepts for industrial purposes using multifunctional filter systems, namely Reverse-Air and Pulse-Jet cleaning systems. Most of used filter bag types are designed as particulate filter bags. Furthermore, multi-purpose filter systems have been developed in the past. Currently, mainly ceramic filter candles are used within the industry. These rigid filter types exhibit a particulate filtration on the surface and a gas remediation by a chemically active support. Multi-purpose textile filters for particulate filtration and gas remediation are described in literature. Those concepts have been developed for Reverse-Air and Pulse-Jet cleaning systems.

Pulse jet filtration devices can be used with a bag-over-bag design. The pulse jet filtration device comprises an outer particulate textile filter bag which restrains the particles in the gas stream and an inner, textile, chemically active filter sleeve which can be a bag. The flue gas surrounds the outer particulate textile filter bag in a pulse jet filtration device to enter it along its outer surface from which the gas stream gets into contact with the inner, chemically active filter sleeve. The purified gas finally enters the hollow interior circumscribed by the chemically active filter sleeve and emerges via an open axial end of the chemically active filter sleeve. Usually, the particulate filter bag and the chemically active filter sleeve are in a suspended arrangement within the filter device and are supported by a cage which is inserted into the chemically active filter sleeve. The chemically active filter sleeve is pressed against the cage by the flue gas stream, and, on its outer surface, contacts the particulate filter bag. For regeneration or replacement of the chemically active filter sleeve in case of a cleaning cycle the cage is first removed from the device before the chemically active filter sleeve is pulled out of the particulate filter bag. The chemically active filter sleeve is removed for regeneration in long cycling periods whereas the particulate filter bag is cleaned in short cycles.

Beside the pulse jet filtration device, a reverse air filtration device is at least theoretically possible, but not reduced to practice. Here, an inner particulate textile filter bag and an outer textile, chemically active filter sleeve or filter bag which is slid over the inner bag. The flue gas stream enters the inner particulate textile filter bag. The gas stream passing the particulate textile filter bag in the radial direction contacts the chemically active component of the textile filter sleeve or filter bag where the contaminants such as NOx or NH₃ react on the surface of the catalytic component.

US 2004/0074391 A1 and US 2007/0104631 A1 both describe filtration systems of a pulse jet filtration device with an outer filter bag and an inner absorbent insert. The absorbent insert is designed so as to absorb mercury from a combustion gas stream. A support cage between outer filter bag and the inner absorbent insert stabilizes both filter parts. A valved pulsed air stream introduced into the inner chamber defined by the absorbent insert cleans particulates from the filter. This cleaning step is achieved when the filter is still arranged within the filtration apparatus.

US 2006/0201119 A1 suggests an air cleaner having a filter catridge and an outer non-woven fabric filter.

JP H 10 230119 A1 is directed to a bag filter unit of different layers, with an outer porous film part, an inner fiber part with a catalytic material thereon and a base fabric part within the fiber part.

DE 100 27 320 A1 and EP 1 157 728 A1 both relate to a filter hose cleaning device wherein the crusty filter cake on the outside of the filter hose consisting of filtered particles is removed by cracking the filter cake and by use of vacuum cleaning. JPH1119477 discloses a bag filter placed over a cage with therein a catalyst layer for removal of NO₂.

It is an object of the present invention to provide a textile filter system for a pulse jet filtration device which is faster and easier to handle in regeneration cycles.

It is a further object of the present invention to provide a method for regenerating a textile filter, in particular a textile filter sleeve, for NOx and/or NH₃ removal wherein the textile filter has a filter carrier of a textile material and a chemically active, catalytic component on the filter carrier, for removing substances from a flue gas stream.

In one aspect of the present invention, the above first object is achieved by a textile filter system of a pulse jet filtration device according to claim 1. The term "radially inward outer surfaces" is not limited to circular cylindrical or generally cylindrical filter sleeves. Rather, it expresses surfaces which are faced towards the interior and exterior of the filter bag.

By providing a friction reduced, smooth inner surface at the particulate textile carrier bag, removal and insertion of the chemically active filter sleeve from and into the particulate filter bag is significantly facilitated as the outer particulate filter bag and the inner chemically active filter sleeve are contacting each other and, furthermore, may adhere to each other as both textile filter layers are pressed onto the cage during filtration mode. Furthermore, jamming or sticking of the bag and the filter at their contacting surfaces can be avoided.

The term "textile" comprises both woven and non-woven fabrics like felt or fleece.

The carrier bag is of a PTFE textile or of any other woven or non-woven textile material. The PTFE textile, especially when woven, provides a very low-friction, smooth surface so that the radially inner surface does not have to be coated or treated. In any case, the friction of the radially inner surface is lower than with a textile comprising a fiberglass fabric or non-woven textile materials.

As an alternative, a coating reducing friction and wear of the bag and of the sleeve can be provided at the inner side of the carrier bag to define the radially inner, downstream low-friction, smooth surface. In addition or alternatively, the radially inner surface of the carrier bag may be flattened, e.g. by calendaring.

In one embodiment of the present invention, the filter bag has a membrane (e.g. a microporouse PTFE membrane) on the outer, upstream surface of the textile carrier bag which membrane defines the upstream surface of the particulate textile filter bag. This membrane can be pre-fabricated and can be laminated onto the carrier bag with or without an adhesive, e.g. a polymer adhesive.

The membrane can fully cover the whole radially outer, upstream surface of the textile carrier bag.

As emphasized before, the textile filter system according to the present invention provides that the chemically active filter sleeve and the particulate filter bag are allowed to contact each other when being inserted.

The textile carrier bag and/or the filter carrier sleeve can be made of a felt or fleece giving the element a certain inherent mechanical stability.

The chemically active compound comprises catalytic particles for NOx and/or NH₃ removal, e.g. vanadium oxide supported on titanium oxide.

The chemically active compound such as the catalytic particles can be applied to the textile fiber or fibers before the filter carrier sleeve is manufactured or can be applied onto the prefabricated textile filter carrier sleeve.

The filter bag has an inner diameter or, more generally, an inner dimension (seen in a cross-sectional view) which is at least 2% larger than the outer dimension of the filter sleeve, i.e. the cross-sectional area of the filter bag is larger than the cross-sectional area of the filter sleeve defined by the inner side and the outer side, respectively, to further reduce friction.

The present invention further provides a method for regenerating a textile filter, in particular a textile filter sleeve for NOx and/or NH₃ removal, a textile filter having a filter carrier of a textile material and a chemically active, catalytic component on the filter carrier for removing NOx and/or NH₃ substances from a flue gas stream according to the independent method claim. The regeneration recovers the activity of the chemically active component of the textile filter after use within a filtration device. The method comprises the steps of:
a) removing the textile filter from the filtration device,
b) washing the textile filter with tap water together with a mechanical treatment of the textile filter, and
c) drying the textile filter.

Textile filters comprising chemically active components at the outer surface are difficult to regenerate as in contrast to other catalytic filters such as filters with ceramic monoliths, the textile is of a thermally sensitive, highly flexible material and consequently, standard regeneration of the catalytic material using high temperatures is not possible. The present invention uses regular tap water for washing the textile filter which has been removed from the filtration apparatus to regenerate the textile filter by mechanically treating it during washing of the textile filter. It has been found that mechanically treating the wet textile filter leads to a superb regeneration effect surprisingly without harming the surface of the chemically active component so that the textile filter maintains its original activity almost completely even after numerous cleaning cycles. After drying the textile filter it is reinstalled into the filtration device.

The present invention preferably provides a method for regenerating a textile filter for flue gas which filter is part of a bag-over-bag textile filter system used in reverse air filtration or pulse jet filtration devices.

The mechanical treatment, which can be performed by mechanical pressure, can be applied by directing pressurized tap water against the textile filter or, preferably, by exerting pressure on the textile filter by use of a mechanical treatment device having one or more filter treatment parts such as plates or other parts being pressed against the textile filter. Further, funnels could be provided through which the textile filters are pulled, edges of rods along which the textile filter is moved and pressed or nip rollers between which the wet textile filter is pressed can be provided. It is to be emphasized that the textile filter can be moved along the mechanical treatment device or vice versa or both, the mechanical treatment device and the textile filter can be moved relative to each other in order to exert mechanical pressure onto the textile filter. During the washing step, tap water reaches the pores of the textile filter and solves compounds which deactivate the chemically active component in the tap water. The tap water with the deactivating components solved therein is washed out from the pores by other tap water reaching the pores and by the mechanical treatment.

The washing step can be performed by bringing the textile filter into contact with tap water, and applying mechanical pressure to the textile filter so as to mechanically treat the filter, wherein both steps are performed successively and/or simultaneously.

In accordance with still another aspect of the present invention, mechanical pressure is applied to the textile filter to squeeze water out of the wet textile filter so that substances on the textile filter are washed away.

With respect to a NOx or NH₃ filter, ammonium sulfate, ammonium bisulfate and ammonium chloride, more generally sal ammoniac is washed out by a combined washing and mechanical treating step. The water can be squeezed out from the filter during washing or during subsequent washing steps and/or after the washing as a first drying step.

The washing step may comprise the step of rinsing the textile filter with fresh tap water, i.e. tap water which has not been used for the regenerating process.

The rinsing step can be performed by spraying fresh tap water onto the textile filter in the course of the washing step.

The washing step is performed more than once, preferably more than twice, most preferably four times per recovering cycle of the textile filter before the filter is reinstalled again.

When the washing step is performed more than once, each separate step comprises washing and mechanically treating.

Furthermore, it is an option to rinse the textile filter with fresh tap water between each or some of the subsequent washing steps. Preferably, rinsing the textile filter with fresh tap water is at least performed after the last washing step in order to wash out all contaminated previously used tap water and, therefore, all substances in the used tap water.

As already mentioned before, the mechanical pressure can be applied by at least one nip roller, preferably by movement of the textile filter between the gap of adjacent nip rollers so that the mechanical pressure is applied by a mangle.

In order to reduce water consumption, the method is performed for more than one textile filter using the same tap water.

The tap water may be controlled to ensure a predetermined minimum pH value, preferably a pH value above 2.5. Tap water having a pH value below 2.5 is not used anymore.

According to one embodiment, the tap water is free of additives and/or untreated, i.e. normal, untreated water from the domestic tap water reservoir is taken without adding any chemical cleaning additives or without desalting or demineralizing the tap water.

The method may be performed with a textile filter made of non-woven or woven material.

As mentioned before, the chemically active compound comprises catalytic particles for NOx and/or NH₃ removal, e.g. vanadium oxide supported on titanium oxide and the chemically active compound such as the catalytic particles can be applied to the textile fiber or fibers before the filter carrier sleeve is manufactured or can be applied onto the prefabricated textile filter carrier sleeve using different techniques as disclosed in US 6,331,351 .

The method can be performed by a regeneration apparatus for textile filters, in particular textile filter sleeves, for NOx and/or NH₃ removal. The regeneration in the regeneration apparatus recovers the activity of the textile filter after use within a filtration device. The apparatus comprises a tap water bath to wet the textile filters with tap water, a device to mechanically treat the textile filters, and a device to dry the textile filters after washing. The regeneration apparatus uses a tap water bath allowing to guide the textile filter through the tap water bath and to wet it. The tap water bath, furthermore, easily allows to repeatedly use the tap water for numerous textile filters.

The mechanical treatment of the textile filters may be performed outside and/or within the tap water bath.

The regeneration apparatus further comprises a supply of fresh water, in particular a fresh water sprayer, to rinse the textile filters with fresh tap water, i.e. tap water which has not been used before.

As mentioned before, at least one set of nip rollers is provided between which the textile filters are moved. The set of nip rollers can be arranged within the tap water bath, i.e. under water, and/or outside of the tap water bath. At least one or one nip roller per set of nip rollers is motor-driven to accelerate the regeneration process within the apparatus.

When performing a regeneration process, the textile filter may run through the regeneration apparatus several times. With respect to nip rollers the textile filters may be moved forth and back by a driven roller.

The above method can be used in connection with the above textile filter system of a pulse jet filtration device according to the present invention.

The various features, arrangements and embodiments discussed above in relation to each aforementioned aspect may be utilized by any of the aforementioned aspects.

Additional aspects and corresponding advantages will be apparent to those skilled in the art upon considering the further description that follows.
Figure 1 is a schematic view of an industrial facility with a textile filter system according to the present invention in which the regeneration apparatus according to the invention is used.
Figure 2 is a schematic sectional view of a textile filter system according to the present invention used in the filtration device shown in Figure 1.
Figure 3 is a partial cross-sectional view through the filter system of Figure 2.
Figures 4 to 6 are schematic views of a first embodiment of the regeneration apparatus in which the regeneration method is performed, the Figures showing three successive steps, and
Figures 7 and 8 are schematic views of a further embodiment of the regeneration apparatus in which a method according to a second embodiment of the invention is shown by successive steps.

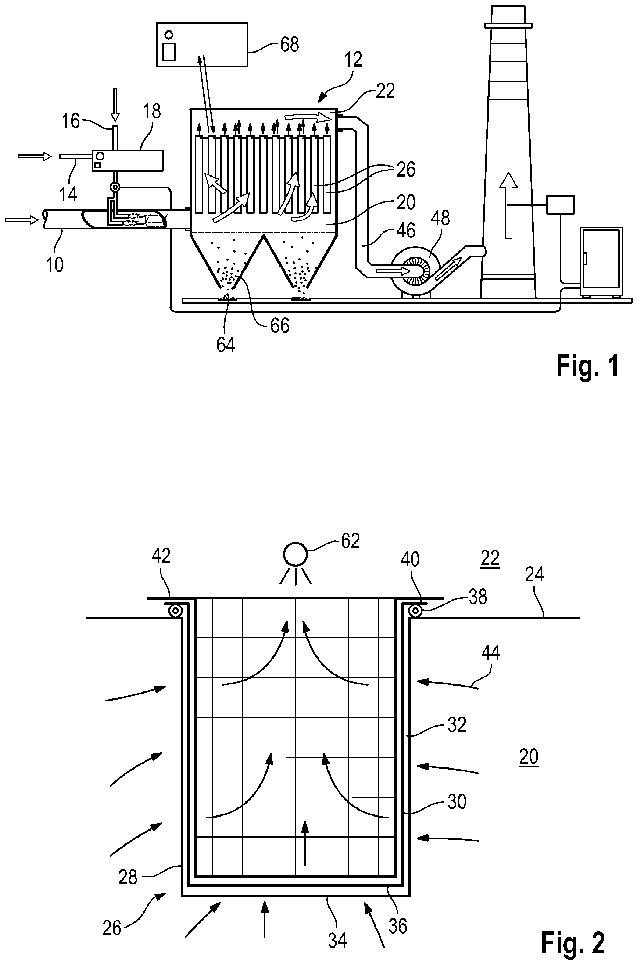

Figure 1 shows an industrial facility in which flue gas from a furnace is guided by an exhaust pipe 10 to a pulse jet filtration device 12.

NH₄OH and compressed air are fed into exhaust pipe 10 via inlet pipes 14 and 16, respectively. A control unit 18 controls the amount of added NH₄OH and compressed air.

As an alternative, a NH₃ slip from an upstream end SNCR catalytic converter flows from a furnace to the pulse jet filtration device 12 via exhaust pipe 10. In this alternative embodiment, NH₄OH and compressed air are not added to the flue gas stream.

Filtration device 12 comprises a dust chamber, 20 (preferably equipped with a hopper) into which exhaust pipe 10 opens, and a clean gas or outlet chamber 22 (in literature also named plenum) arranged downstream of dust chamber 20. Outlet chamber 22 is separated from dust chamber 20 by an intermediate wall 24, also referred to as head plate, cell plate or tube sheet, shown in Figure 2.

Numerous parallel textile filter systems 26 also referred to as filter cartridges are arranged in dust chamber 20, one of which being shown in Figure 2.

The textile filter systems 26 have the shape of bags which are attached to the intermediate wall 24 at their open ends and which hang into dust chamber 20.

The textile filter system 26 as shown in Figure 2 comprises a particulate textile filter bag 28 for particle retention in the gas stream. The textile filter bag 28 defines the outer bag of a bag-over-bag design further comprising a textile, chemically active filter sleeve 30 which is arranged within textile filter bag 28. Textile filter bag 28 has an inner dimension (with respect to a cross-sectional view) which is at least 2% larger than the outer dimension of chemically active filter sleeve 30 so that insertion or removal of filter sleeve 30 into and from filter bag 28 is enabled without exerting high forces. The sleeve 30 and the bag 28 usually have the same cross-sectional geometrical shape.

Due to the flexibility of bag 28 and sleeve 30 both are contacting each other at least in major portions. In certain areas, a small gap 32 may be provided between textile filter bag 28 and chemically active filter sleeve 30 in the non-active state of the textile filter system, i.e. when no gas stream is provided. In the activated state of the device, bag 28 is pressed against sleeve 30 so that both are contacting each other completely (i.e. over their whole surface areas lying opposite to each other) or almost completely.

Chemically active filter sleeve 30 can be designed as a bag as shown in Figure 2.

Filter bag 28 and filter sleeve 30 have a cylindrical shape with textile bottom walls 34 and 36, respectively, so that the inner diameter of bag 28 is at least 2% larger than the outer diameter of sleeve 30. As an alternative, bag 28 and sleeve 30 may have the shape of an envelope and may taper to their free lower ends.

Opposite to bottom walls 34 and 36, textile filter bag 28 and chemically active filter sleeve 30 each have an open axial end, wherein the edges are provided as or provided with flanges **38 and 40,** respectively, allowing to removably install and hold the hanging filter system 26 to wall 24.

As filter bag 28 and filter sleeve 30 are of textile material and flexible, a support cage 42 is removably inserted into filter system 26 to ensure that filter system 26 retains its shape when flue gas stream 44 (see arrows in Figure 2) exerts an outer pressure onto the filter system.

As shown in Figure 1, numerous filter systems 26 are arranged close to each other and are closely packed. The open ends of the filter systems 26 open into outlet chamber 22 from which filtered flue gas will be guided via outlet pipe 46 to exhaust into the environment. An exhaust section fan may be used to generate low pressure within outlet chamber 22.

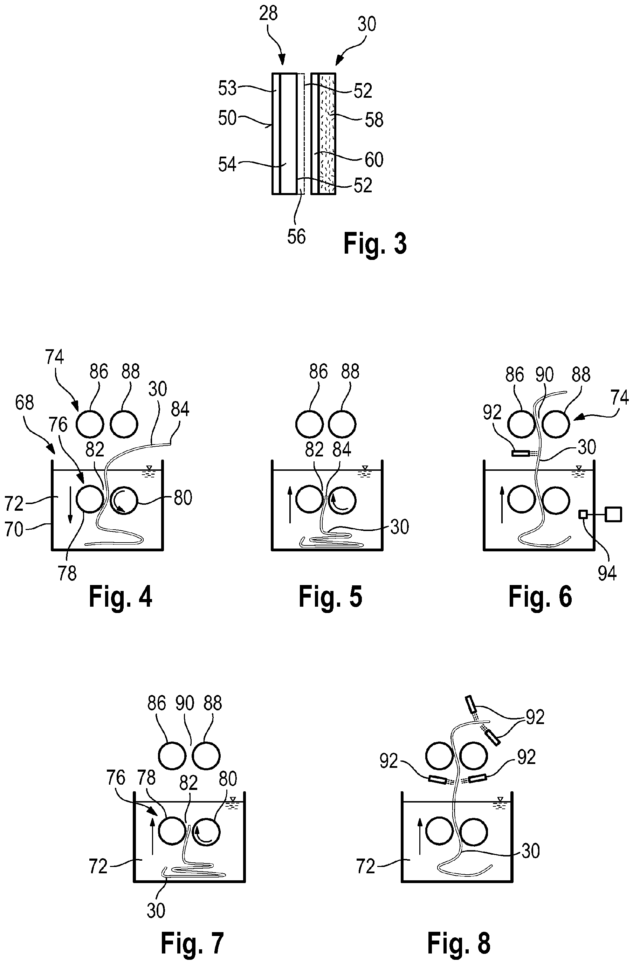

As shown in Figure 3, filter bag 28 has a radially outer, upstream surface 50 and a radially inner, downstream surface 52. Filter bag 28 comprises a carrier bag 52 of textile material made of a woven or non-woven fabric, e.g. of PTFE fabrics. A microporous ePTFE membrane 53 is attached, e.g. laminated to the outer side of carrier bag 52 to define upstream surface 50. The inner, downstream surface of textile carrier bag 54 is a smooth, low-friction surface. This surface is defined by an untreated and uncovered surface of the carrier bag 54 made of PTFE, preferably a woven PTFE textile which per se has a low friction rate.

As an alternative, the inner surface of the carrier bag 54 is calendered and/or covered by a friction reducing coating 56 (see broken lines in Figure 3) to define the inner surface 52.

Membrane 53 is provided by a pre-fabricated membrane laminated onto carrier sleeve 54 with or without an adhesive such as polymer adhesive.

Textile, chemically active filter sleeve 30 comprises a filter carrier sleeve 58 of textile material made of a woven or non-woven fabric and a chemically active component, in particular a catalytic component 60 on carrier sleeve 58. Component 60 is symbolically shown in Figure 3. In fact, component 60 is defined by catalytic particles to remove NOx and/or NH₃ from the flue gas stream. Vanadium oxide supported on titanium oxide is one example of an active catalytic compound.

The catalytic particles are applied onto the fibers of carrier sleeve 58 before or after carrier sleeve 58 is manufactured, i.e. catalytic particles are not only arranged at the outer surface of carrier sleeve 58 but also within the pores or gaps between adjacent fibers of carrier sleeve 58.

Carrier sleeve 58 may have a certain mechanical stiffness, e.g. by being made from felt or fleece.

Flue gas comprising NOx and/or NH₃ flowing into dust chamber 20 enters textile filter systems 26 via the outer surface 50 of particulate filter bags 28. Particulates within the flue gas stream having a certain dimension are restrained from entering outlet chamber 22 by particulate filter bag 28. Particles may accumulate onto the outer surface of filter bag 28, i.e. at ePTFE membrane 53. Particles may fall down within dust chamber 20 or may accumulate to form a filter cake. During the filtration process filter bag 28 is pressed inwardly to fully contact filter sleeve 30.

The mechanically filtered flue gas is almost dust free and enters filter sleeve 30 where, due to the catalytic surface of the chemically active component, NOx and/or NH₃ may react to N₂ and water or to NH₄HSO₄ and (NH₄)₂SO4.

Due to the injection of reducing agent upstream the filter device, the incoming flue gas contains NOx and NH₃ in an appropriate ratio. The catalytic reduction of NOx takes place within filter sleeve 30, more detailed within the felt defining the carrier sleeve 58. The design of the felt promotes an intensive contact of the gas phase with the active sites of the catalytic particles. This interaction results in a very low NH₃ slip. The implementation into off-gas treatment systems includes the appropriate supply of NH₃, either as directly injected NH₄OH or as NH₃ slip from a SNCR upstream.

For cleaning of filter bag 28, pressurized pulse jet air flow is blown via nozzle 62 into filter system 26 from the open outlet end of filter system 26 so that particles 64 accumulated onto filter bag 28 are removed and fall down within dust chamber 20 to accumulate at funnel outlets 66 at the bottom of dust chamber 20, preferably equipped with at least one hopper.

Of course, filter bag 28 can also be removed from filtration device 12 to be further cleaned.

The pulse jet of pressurized air blown in the opposite direction of the flue gas stream within the device, however, leads to reduced efforts and reduced downtime of the filtration device for cleaning cycles.

When the catalytic activity of filter sleeve 30 decreases, filter sleeve 30 is removed and regenerated in a regeneration apparatus 68.

To regenerate textile, chemically active filter sleeve 30, filter sleeve 30 is removed from filtration device 12 after cage 42 is pulled out from filter system 26.

In Figures 4 to 6, regenerator apparatus 68 is schematically shown.

Regenerator apparatus 68 comprises a basin 70 containing a tap water bath 72 with regular tap water at ambient temperature which is fully untreated, i.e. does not contain any additives like washing additives and is not desalted or demineralized.

Device 76 for mechanical treatment of filter sleeve 30 is arranged within water bath 72, i.e. is arranged under water. Device 74 is positioned outside of water bath 72.

Without being treated or sprayed with chemical cleaning liquid, filter sleeve 30 is washed, i.e. contacted with tap water by being moved into tap water bath 72.

Device 76 comprises two adjacent nip rollers 78 and 80, of which nip roller 80 is driven by a motor.

In this washing step, filter sleeve 30 is pulled through gap 82 between nip rollers 78 and 80 so that sleeve 30 is mechanically treated and washed simultaneously like in a mangle. Tap water is squeezed out of wet sleeve 30 so that substances on and within sleeve 30 are washed out to regenerate sleeve 30. After having passed through nip rollers 78 and 80, tap water will again enter sleeve 30. These steps of washing the textile sleeve together with a mechanical treatment may be performed several times in one recovery cycle before filter sleeve 30 is reinstalled into filter system 26 again.

In order to automate the washing step, nip roller 80 will be driven in the counter direction after sleeve 30 has been pulled down into gap 82 and end edge 84 of sleeve 30 reaches gap 82 (see Figure 5). Afterwards, sleeve 30 is pulled through gap 82 again in counter direction before roller 80 is changed over again.

Preferably, this washing step is performed more than twice, especially four times per recovery cycle.

After the final washing step, sleeve 30 is dried by device 74 which also comprises two adjacent nip rollers 86 and 88, of which one roller is electrically driven.

Of course, more than one set of nip rollers can be arranged outside or inside tap water bath 72.

Figure 5 shows the situation in which edge 84 reaches gap 82 so that the rotational direction of nip roller 80 is changed.

Figure 6 depicts the drying step when tap water is squeezed out from sleeve 30 when passing through gap 90 between nip rollers 86 and 88.

In an alternative step, textile sleeve 30 may be rinsed with fresh tap water (see nozzle 92 in Figure 6) before entering device 74. Fresh tap water is sprayed onto sleeve 30 at high pressure.

The moisture content of sleeve 30 after passing device 74 is about 30 percent so that sleeve 30 is fully dried outside of regeneration apparatus 68 before being reinstalled into a particulate filtration apparatus. It has been found out that by exerting mechanical pressure onto textile sleeve 30 in the washing step, the catalytic activity of the system is restored to more than 90 percent.

Thus, sleeve 30 can be regenerated several times.

The tap water is used for numerous regeneration processes of numerous filter sleeves 30 in order to reduce the amount of waste water. A device 94 (see Figure 6) comprising a sensor and a control unit controls the pH value of water bath 72. As soon as the pH value has reached 2.5, tap water is replaced by fresh tap water. According to one option, no additives to increase the pH value are used.

Figures 7 and 8 show a further embodiment of the regeneration apparatus.

The apparatus 68 of Figures 7 and 8 has almost the same design as apparatus 68 shown in Figures 4 to 6 so that only the differences and the method carried out by the apparatus of Figure 7 are explained below.

In an initial regeneration step, textile sleeve 30 is first pressed under the water surface and into the tap water bath 72. Afterwards, the wet textile sleeve 30 is moved through gap 82 by driving nip roller 80 (see Figure 7).

Sleeve 30 is transported to device 74 and passes through gap 90 between nip rollers 86 and 88 (see Figure 8).

Sleeve 30 can be sprayed with fresh tap water between devices 74 and 76 (see nozzles 92 in Figure 8) and/or after having passed device 74 (see Figure 8). After the first washing and drying step has been performed, sleeve 30 is moved back through gaps 90 and 82 into tap water bath 72 in order to carry out a second washing step. Again, preferably more than one of these washing steps are performed, e.g. four or five washing steps.

It will be appreciated that the regeneration apparatus and the method for regenerating the sleeve is not limited to the sleeve shown in Figure 3. The regeneration step and the regeneration apparatus can be used for other textile filters having a chemically active component on the filter carrier and which are used for removing substances from a flue gas stream.

In addition, the regeneration apparatus is not limited to nip rollers to exert mechanical pressure onto the textile filter.

Instead of moving sleeve 30 relative to the stationarily placed nip rollers, the nip rollers can be driven through tap water bath 72 or, more generally, along sleeve 30.

## Claims

1. A textile filter system of a pulse jet filtration device (12), the system (26) comprising:
a particulate textile filter bag (28) to restrain particles in a gas stream (44), the filter bag (28) having a radially outer, upstream surface (50) and a radially inner, downstream surface (52), and being provided with a textile carrier bag (54), the radially inner, downstream surface (52) of the filter bag (28) being provided as a low-friction surface, and
a textile, chemically active filter sleeve (30) having a filter carrier sleeve (58) of textile material and a chemically active component (60) on the filter carrier sleeve (58) comprising catalytic particles to remove NOx and/or NH₃ substances from the gas stream (44),
the filter sleeve (30) being insertable into the filter bag (28) to be arranged within the filter bag (28) and being removable from the filter bag (28), and the low friction surface being implemented by one of:
- providing a textile carrier bag (54) made of a PTFE textile, wherein the radially inner, downstream surface (52) of the particulate filter bag (28) is defined by the PTFE textile defining the carrier bag (54);
- providing a coating material at the radial inner side of the textile carrier bag (54); and
- providing a textile carrier bag (54) with a flattened, calendered radial inner surface (52).

2. The textile filter system of claim 1, wherein the upstream surface (50) of the filter bag (28) is defined by a microporous membrane, in particular a pre-fabricated membrane laminated onto the filter carrier sleeve (54) with or without an adhesive.

3. The textile filter system of any of the preceding claims, wherein the filter bag (28) has an inner dimension, seen in cross-section, which is at least 2% larger than the outer dimension of the filter sleeve (30).

4. A method of regenerating the textile filter system of claim 1, the regeneration recovering the activity of the chemically active catalytic component (60)by the following steps:
a) removing the textile filter from the filtration device,
b) washing the textile filter with tap water together with a mechanical treatment of the textile filter, and
c) drying the textile filter.

5. The method according to claim 4, wherein the washing step b) is performed according to the following steps:
b1) bringing the textile filter in contact with tap water, and
b2) applying mechanical pressure to the textile filter,
wherein steps b1) and b2) are performed successively and/or simultaneously.

6. The method according to claim 4 or 5, wherein at least one of the washing step b) and the drying step c) comprises the step of:
applying mechanical pressure to the textile filter to squeeze water out of the wet textile filter.

7. The method according to claims 5 or 6, wherein the washing step b) comprises the step:
b3) rinsing the textile filter with fresh tap water.

8. The method according to claim 7, wherein rinsing of the textile filter with fresh tap water is performed by spraying the textile filter with fresh tap water.

9. The method according to any of claims 4 to 8, wherein the washing step b) is performed more than once, preferably more than twice, most preferably 4 times per recovery cycle of the textile filter.

10. The method according to any of claims 4 to 9, wherein the mechanical treatment comprises applying mechanical pressure to the textile filter, the mechanical pressure being applied by at least one nip roller (78, 80, 86, 88), more preferably by a mangle.

11. The method according to any of claims 4 to 10, wherein the tap water is at least one of free of additives and untreated.

## Patentansprüche

1. Textilfiltersystem einer Pulse-Jet-Filtervorrichtung (12), wobei das System (26) folgendes umfasst:
einen Textilpartikelfilterbeutel (28) zum Zurückhalten von Partikeln in einem Gasstrom (44), wobei der Filterbeutel (28) eine radial äußere, stromaufwärts gelegene Oberfläche (50) und eine radial innere, stromabwärts gelegene Oberfläche (52) aufweist und mit einem Textilträgerbeutel (54) bereitgestellt ist, wobei die radial innere, stromabwärts gelegene Oberfläche (52) des Filterbeutels (28) als eine reibungsarme Oberfläche bereitgestellt ist; und
einen textilen, chemisch aktiven Filterschlauch (30) mit einem Filterträgerschlauch (58) aus einem Textilmaterial und einer chemisch aktiven Komponente (60) an dem Filterträgerschlauch (58), umfassend katalytische Partikel zur Entfernung von NOx- und/oder NH₃-Substanzen aus dem Gasstrom (44);
wobei der Filterschlauch (30) in den Filterbeutel (28) so eingeführt werden kann, dass er in dem Filterbeutel (28) angeordnet ist, und wobei er aus dem Filterbeutel (28) entfernt werden kann, und wobei die reibungsarme Oberfläche durch eines der folgenden bereitgestellt wird:
- Bereitstellen eines Textilträgerbeutels (54) aus einer PTFE-Textilie, wobei die radial innere, stromabwärts gelegene Oberfläche (52) des Partikelfilterbeutels (28) durch die PTFE-Textilie definiert ist, welche den Trägerbeutel (54) definiert;
- Bereitstellen eines Überzugsmaterials an der radial inneren Seite des Textilträgerbeutels (54); und
- Bereitstellen eines Textilträgerbeutels (54) mit einer abgeflachten, kalandrierten radial inneren Oberfläche (52).

2. Textilfiltersystem nach Anspruch 1, wobei die stromaufwärts gelegene Oberfläche (50) des Filterbeutels (28) durch eine mikroporöse Membran definiert ist, im Besonderen eine vorgefertigte Membran, die mit oder ohne Haftmittel auf den Filterträgerschlauch (54) laminiert ist.

3. Textilfiltersystem nach einem der vorstehenden Ansprüche, wobei der Filterbeutel (28) eine im Querschnitt gesehene Innengröße aufweist, die mindestens 2% größer ist als die Außengröße des Filterschlauchs (30).

4. Verfahren zur Regeneration des Textilfiltersystems nach Anspruch 1, wobei die Regeneration die Aktivität der chemisch aktiven katalytischen Komponente (60) durch die folgenden Schritte wiederherstellt:
a) Entfernen des Textilfilters von der Filtervorrichtung;
b) Waschen des Textilfilters mit Leitungswasser in Verbindung mit einer mechanischen Behandlung des Textilfilters; und
c) Trocknen des Textilfilters.

5. Verfahren nach Anspruch 4, wobei der Schritt des Waschens b) gemäß den folgenden Schritten ausgeführt wird:
b1) Inkontaktbringen des Textilfilters mit Leitungswasser; und
b2) Ausüben von mechanischem Druck auf den Textilfilter,
wobei die Schritte b1) und b2) nacheinander und/oder gleichzeitig ausgeführt werden.

6. Verfahren nach Anspruch 4 oder 5, wobei mindestens ein Schritt des Schritts des Waschens b) und des Schritt des Trocknens c) den folgenden Schritt umfasst:
Ausüben von mechanischem Druck auf den Textilfilter, um Wasser aus dem feuchten Textilfilter zu quetschen.

7. Verfahren nach Anspruch 5 oder 6, wobei der Schritt des Waschens b) den folgenden Schritt umfasst:
b3) Spülen des Textilfilters mit frischem Leitungswasser.

8. Verfahren nach Anspruch 7, wobei das Spülen des Textilfilters mit frischem Leitungswasser durch Besprühen des Textilfilters mit frischem Leitungswasser durchgeführt wird.

9. Verfahren nach einem der Ansprüche 4 bis 8, wobei der Schritt des Waschens b) mehr als einmal ausgeführt wird, vorzugsweise zweimal, am meisten bevorzugt viermal je Wiederherstellungszyklus des Textilfilters.

10. Verfahren nach einem der Ansprüche 4 bis 9, wobei die mechanische Behandlung das Ausüben von mechanischem Druck auf den Textilfilter umfasst, wobei der mechanische Druck durch mindestens eine Andruckwalze (78, 80, 86, 88) ausgeübt wird, darüber hinaus bevorzugt durch eine Quetschvorrichtung.

11. Verfahren nach einem der Ansprüche 4 bis 10, wobei das Leitungswasser wenigstens frei von Zusatzstoffen und/oder unbehandelt ist.

## Revendications

1. Système de filtre textile d'un dispositif de filtration à jet pulsé (12), le système (26) comprenant :
un sac filtre textile (28) à matière particulaire pour retenir les particules dans un flux gazeux (44), le sac filtre (28) ayant une surface amont radialement extérieure (50) et une surface aval radialement intérieure (52), et étant muni d'un sac de support textile (54), la surface aval radialement intérieure (52) du sac filtre (28) étant fournie comme une surface à faible frottement, et
un manchon filtre (30) textile chimiquement actif ayant un manchon porte-filtre (58) en matière textile et un composant chimiquement actif (60) sur le manchon porte-filtre (58) comprenant des particules catalytiques pour éliminer les substances NOx et/ou NH₃ du flux gazeux (44),
le manchon filtre (30) pouvant être inséré dans le sac filtre (28) pour être disposé à l'intérieur du sac filtre (28) et pouvant être retiré du sac filtre (28), et la surface à faible frottement étant mise en œuvre par :
- la fourniture d'un sac de support textile (54) fait d'un textile PTFE, la surface aval radialement intérieure (52) du sac filtre (28) à matière particulaire étant définie par le textile PTFE définissant le sac de support (54) ;
- la fourniture d'un matériau de revêtement sur la face intérieure radiale du sac de support textile (54) ; et
- la fourniture d'un sac de support textile (54) avec une surface intérieure radiale (52) aplatie et calandrée.

2. Système de filtre textile selon la revendication 1, la surface amont (50) du sac filtre (28) étant définie par une membrane microporeuse, en particulier une membrane préfabriquée laminée sur le manchon porte-filtre (54) avec ou sans adhésif.

3. Système de filtre textile selon l'une quelconque des revendications précédentes, le sac filtre (28) ayant une dimension intérieure, vue en coupe transversale, qui est au moins 2 % plus grande que la dimension extérieure du manchon filtre (30).

4. Procédé de régénération du système de filtre textile selon la revendication 1, la régénération récupérant l'activité du composant catalytique chimiquement actif (60) par les étapes suivantes :
a) retrait du filtre textile du dispositif de filtration,
b) lavage du filtre textile à l'eau du robinet, accompagné d'un traitement mécanique du filtre textile, et
c) séchage du filtre textile.

5. Procédé selon la revendication 4, l'étape de lavage b) étant effectuée conformément aux étapes suivantes :
b1) mise du filtre textile en contact avec l'eau du robinet, et
b2) application d'une pression mécanique sur le filtre textile,
les étapes b1) et b2) étant effectuées successivement et/ou simultanément.

6. Procédé selon la revendication 4 ou 5, au moins l'une des étapes de lavage b) et de séchage c) comprenant l'étape suivante :
application d'une pression mécanique sur le filtre textile pour faire sortir l'eau du filtre textile humide.

7. Procédé selon la revendication 5 ou 6, l'étape de lavage b) comprenant l'étape suivante :
b3) rinçage du filtre textile à l'eau douce du robinet.

8. Procédé selon la revendication 7, le rinçage du filtre textile à l'eau douce du robinet étant effectué en pulvérisant le filtre textile avec de l'eau douce du robinet.

9. Procédé selon l'une quelconque des revendications 4 à 8, l'étape de lavage b) étant effectuée plus d'une fois, de préférence plus de deux fois, de préférence 4 fois par cycle de récupération du filtre textile.

10. Procédé selon l'une quelconque des revendications 4 à 9, le traitement mécanique comprenant l'étape d'application d'une pression mécanique sur le filtre textile, la pression mécanique étant appliquée par au moins un rouleau pinceur (78, 80, 86, 88), de préférence par une calandre.

11. Procédé selon l'une quelconque des revendications 4 à 10, l'eau du robinet étant exempte d'additifs et/ou non traitée.
